# EUROPÄISCHE PATENTANMELDUNG

(11) **EP 1 626 202 A1**
(43) Veröffentlichungstag der Anmeldung: **15.02.2006**
(21) Anmeldenummer: 05017508.2
(22) Anmeldetag: 11.08.2005
(51) Int. Cl.: F16H 1/32, B60N 2/225

(54) **Untersetzungsgetriebe und dieses verwendende Antriebseinheit**

(30) Priorität: 11.08.2004 DE 102004039057
(71) Anmelder: Peter, Cornelius, 77815 Bühl (DE)
(72) Erfinder: Peter, Cornelius, 77815 Bühl (DE)
(74) Vertreter: Hruschka, Jürgen

(57) **Zusammenfassung**

Die vorliegende Erfindung betrifft ein Untersetzungsgetriebe (1) und eine Antriebseinheit (14), welche ein derartiges Untersetzungsgetriebe (1) verwendet. Die Antriebseinheit (14) zeichnet sich durch einen besonders flachen Aufbau aus, da die einzelnen Bauteile um einen ortsfesten Lagerstab (9) aufgebaut sind und ineinander greifen. Das Untersetzungsgetriebe (1) weist ein Antriebselement (2) auf, welches innerhalb eines dieses übergreifenden Abtriebselements (3) eine Taumelbewegung vollführt.

## Beschreibung

Die vorliegende Erfindung betrifft ein Untersetzungsgetriebe und insbesondere eine Antriebseinheit, in welcher ein derartiges Untersetzungsgetriebe zum Einsatz kommt.

Untersetzungsgetriebe dienen dazu, eine hohe Eingangsdrehzahl, wie sie typischerweise von Elektromotoren bereitgestellt wird, in eine niedrigere Ausgangsdrehzahl umzuwandeln, um über entsprechende Mechanismen bestimmte Massen bewegen zu können. Untersetzungsgetriebe kleinerer Bauart finden vermehrt Einsatz in Bereichen der Kfz-Technik, wo sie Bestandteil von Stellmotoren bilden, wie beispielsweise in Fensterhebermotoren, Sitzverstellmotoren usw..

Aus der Fachwelt sind die unterschiedlichsten Getriebemechanismen für Untersetzungsgetriebe bekannt. Eine Besonderheit bieten die allgemein als "Harmonic-Drive-Antriebe" bezeichneten Untersetzungsgetriebe.

Deren allgemeine Funktion beruht darauf, dass ein rotierend angetriebener Kern ein radial verformbares Innenradreifenelement umlaufend radial verformt und dadurch dessen Außenmantelfläche umlaufend lokal nach außen gegen eine hohlzylindrische Innenmantelfläche eines gehäusefesten, stationären und formstabilen Stützrings andrückt, welcher einen geringfügig größeren Umfang aufweist. Infolgedessen wälzt sich - je nach Ausführungsform - das Innenrad selbst oder ein darauf verdrehbar gelagerter Radreifen kraftschlüssig über Reibflächen oder formschlüssig über Verzahnungen im Stützring ab, wobei sich das Rad bzw. sein Reifen nach Maßgabe der Umfangsdifferenz bzw. der Zähnezahl zwischen Stützring und Innenrad langsamer als der elektromotorisch angetriebene Kern dreht. Diese dadurch gegenüber dem Antrieb stark verlangsamte Drehbewegung kann vorzugsweise über eine Außenverzahnung des Innenrad-Reifens auf eine Innenverzahnung eines weiteren, zum Stützring konzentrischen aber in Gegensatz zu diesem nicht stationär, sondern koaxial verdrehbar angeordneten Außenrings übertragen werden, welcher mit einer im Getriebegehäuse drehbar gelagerten Abtriebswelle ausgestattet ist.

Aus dem deutschen Gebrauchsmuster DE 29614738 U1 ist ein solches gattungsgemäßes Untersetzungsgetriebe bekannt, bei welchem die radiale Verformungsfähigkeit eines innen liegenden Antriebselements genutzt wird. Ein radial flexibles Zahnrad stützt sich mit seiner Außenmantelfläche zumindest abschnittsweise an einer diese umgebenden zylindrischen Stützfläche und wälzt sich entsprechend daran ab. Angetrieben durch einen exzentrischen, insbesondere ellipsenförmigen Antriebskern wird zumindest ein Umfangsabschnitt der Außenmantelfläche des Antriebselements in fortlaufendem Wechsel mit der Stützfläche eines starren Stützrings in schlupffreiem Eingriff gehalten. Gleichzeitig wird ein darüber liegendes, als Hohlrad ausgebildetes Abtriebselement mit dem Antriebselement in Eingriff gehalten. Durch die Drehbewegung des exzentrischen bzw. elliptischen Antriebskerns wird das Antriebselement laufend elliptisch verformt. Diese elliptische Verformung wird dadurch übertragen, dass laufend Zähne der Außenverzahnung des Antriebselements mit der Innenverzahnung des stillstehenden Stützringes in Eingriff kommen. Indem die Zähnezahl der Außenverzahnung des Antriebselements kleiner gewählt wird als die Zähnezahl der Innenverzahnung des Stützringes, ergibt sich eine fortlaufende Drehung des Antriebselements gegenüber dem stillstehenden Stützring, welche dann auf das darüber liegende Abtriebshohlrad mit entsprechender Untersetzung übertragen wird.

Ein weiteres gattungsgemäßes Getriebe ist aus der deutschen Offenlegungsschrift DE 19708310 A1 bekannt, welches das Prinzip eines verformbaren Antriebselements aufgreift. Bei dem aus dieser Druckschrift bekannten Untersetzungsgetriebe werden in einer Ausführungsform mehrere innen liegende Antriebselemente verwendet. So ist es beispielsweise vorgesehen, statt einem einzigen radial verformbaren Innenzahnrad zwei oder drei Planetenräder zu verwenden, welche sich beim Drehen an einem radial verformbaren Ring mit verzahnter Außenmantelfläche an dessen Ringinnenseite abwälzen, so dass stets zwei bzw. drei Umfangsabschnitte dieser Außenmantelfläche mit der Innenverzahnung eines Stützrings kämmen.

Ein weiteres gattungsgemäßes Untersetzungsgetriebe ist aus der deutschen Patentschrift DE 19943021 C1 bekannt. Bei diesem Untersetzungsgetriebe wird das vorhergehend beschriebene Prinzip ebenfalls verwirklicht. Das Abtriebselement ist dabei als ein Hohlrad ausgebildet, welches schalenartig das Antriebselement übergreift und an seiner Oberfläche mit einer mittigen Abtriebswelle, welche koaxial zu der Eingangswelle des Motors verläuft, versehen ist. Der in dieser Druckschrift gezeigte "schalenartige" Aufbau gestattet einen besonders flachen Aufbau der gesamten Antriebseinheit, so dass sich diese vorzugsweise für den Einsatz in engen Bauräumen eignet.

Allen vorgenannten Untersetzungsgetrieben ist der Nachteil gemeinsam, dass zumindest ein radial flexibles bzw. radial verformbares Antriebselement vorgesehen werden muss. Dieser Aspekt muss bei der Herstellung und Auslegung des Untersetzungsgetriebes und bei der Materialauswahl des Antriebselements bereits berücksichtigt werden, was die Kosten erhöht. Darüber hinaus sind die in den beschriebenen Untersetzungsgetrieben zum Einsatz kommenden Bauteile je nach Ausführungsform teilweise nur schwer miteinander zu montieren. Insbesondere muss das elastisch verformbare Antriebselement gleichzeitig in die Innenverzahnung des außen liegenden Stützringes und des drehbaren Abtriebselements eingesetzt werden.

Ausgehend davon ist es die Aufgabe der vorliegenden Erfindung, ein Untersetzungsgetriebe bereitzustellen, welches auf das Prinzip von radial verformbaren Elementen verzichtet und dennoch eine ausreichende Untersetzung bei gleichzeitiger Realisierung einer einfachen Montage und eines flachen Aufbaus gewährleistet. Darüber hinaus ist es die Aufgabe der vorliegenden Erfindung, eine Antriebseinheit bereitzustellen, welche ein derartiges Untersetzungsgetriebe mit den damit verbundenen Vorteilen zur Anwendung bringt.

Gelöst werden diese Aufgaben jeweils mit einem Untersetzungsgetriebe mit den Merkmalen nach Anspruch 1 und einer Antriebseinheit mit den Merkmalen nach Anspruch 13.

Der Kern der Erfindung besteht demzufolge darin, dass das aus einem Hohlrad als Abtriebselement und aus einem in diesem Hohlrad angeordneten und mit diesem zusammen wirkenden Antriebselement bestehende Untersetzungsgetriebe derart aufgebaut ist, dass sowohl das Antriebselement als auch das Abtriebselement gemeinsam auf einem orts- und drehfesten Lagerstab gelagert sind. Mit anderen Worten, die Achse, um welche sich alle Komponenten des Untersetzungsgetriebes gemeinsam und zumindest teilweise rotationssymmetrisch aufbauen, ist stationär angeordnet. Vorzugsweise bildet dieser Lagerstab einen Bestandteil des Gehäuses des Untersetzungsgetriebes bzw. der dieses beinhaltenden Antriebseinheit.

Die erfindungsgemäße Ausgestaltung des Untersetzungsgetriebes gestattet eine einfache Montage von allen seinen Komponenten auf dem gehäusefesten Lagerstab, wobei die einzelnen Bauteile lediglich aufeinander auf den Lagerstab aufgesetzt werden müssen. Eine zentrale ortsfeste Achse vereinfacht insgesamt die Lagerung der sich drehenden Bauteile.

Gemäß der Erfindung ist das Antriebselement relativ zu der Drehachse des Abtriebselements, welche mit der Achse des orts- und drehfesten Lagerstabs koaxial übereinstimmt, exzentrisch gelagert.

Dadurch wird es möglich, wenn das Antriebselement einen kleineren Umfang als das Abtriebselement aufweist, dass zumindest ein Umfangsabschnitt der Mantelfläche des Antriebselements mit der Innenfläche des als ein Hohlrad ausgebildeten Abtriebselements in fortlaufendem Wechsel in Kontakt steht. Es ist hervorzuheben, dass das innen liegende Antriebselement, im Gegensatz zum vorhergehend geschilderten Stand der Technik, nicht radial verformbar, sondern starr ausgebildet ist.

Um nun eine entsprechende Übertragung der von einem Motor stammenden hohen Drehzahl mit Untersetzung zu ermöglichen, muss nach der erfindungsgemäßen Lösung eine Drehbewegung des innen liegenden Antriebselements um die Achse des Lagerstabs verhindert werden. Hierzu ist gemäß der Erfindung zumindest ein ortsfestes Lager vorgesehen, in welchem das Antriebselement mit Spiel gelagert ist.

Das Spiel dieser Lagerung ist dabei gemäß der Erfindung so gewählt, dass das Antriebselement beim Abwälzen seines zumindest einen Umfangsabschnitts seiner Mantelfläche auf der Innenfläche des Hohlrads eine so genannte Taumelbewegung um die Achse des ortsfesten Lagerstabs vollführt.

Die Umfangsdifferenz des Antriebselements zu dem außen liegenden Hohlrad einerseits und die exzentrische Lagerung des Antriebselements andererseits bewirkt, dass jeder Punkt des Antriebselements außerhalb der zentralen Achse des stationären Lagerstabs eine kreisähnliche Bewegung vollführt.

Um dies zu ermöglichen, weist das Antriebselement eine Nabe auf, in welcher ein motorgetriebener Exzenter, quasi der Antriebskern, gleitfähig aufgenommen ist. Der Exzenter selbst ist um die Achse des ortsfesten Lagerstabs drehbar gelagert. Durch die Drehung des Exzenters um den Lagerstab wird die Exzentrizität auf das Antriebselement übertragen, wobei sich die Außenmantelfläche des Exzenters relativ zur Innenfläche der Nabe des Antriebselements gleitfähig verschiebt.

Dies ist der Fall, da das Antriebselement in dem zumindest einen ortsfesten Lager an einer Drehung gehindert wird. Der gemäß der Erfindung durch das Spiel dieser Lagerung vorgesehene Freiheitsgrad gestattet demzufolge lediglich eine entsprechende Taumelbewegung des Antriebselements in der horizontalen Ebene.

In einer besonderen Ausführung des Untersetzungsgetriebes gemäß der Erfindung ist das Antriebselement drehfest auf einer dem Hohlrad gegenüberliegenden Lagerplatte angeordnet, welche horizontal beweglich gelagert ist und eine Öffnung für einen während der gesamten Taumelbewegung berührungslosen Durchgriff des Lagerstabs aufweist. Die horizontal bewegliche Lagerung der Lagerplatte ist selbstverständlich derart, dass das Spiel der Lagerung ebenfalls nur eine solche horizontale Bewegung des Antriebselements bzw. der Lagerplatte zulässt, die ein fortlaufendes Umfangs-abschnittsweises Abwälzen des Antriebselements im Hohlrad gestattet.

Aus herstellungstechnischen Gründen ist es von Vorteil, wenn das Antriebselement mit der Lagerplatte einstückig, insbesondere als Kunststoffspritzgussteil, ausgebildet ist.

Die horizontal bewegliche Lagerung der Lagerplatte bzw. des sich darauf befindlichen Antriebselements wird in einer besonderen Ausführungsform des Untersetzungsgetriebes gemäß der Erfindung dadurch bewerkstelligt, dass die Lagerplatte an ihren jeweils einander gegenüberliegenden Ecken vier Lagerzapfen aufweist, welche sich vertikal von dem Antriebselement weg parallel zu der Achse des ortsfesten Lagerstabs erstrecken und in an entsprechenden Stellen ortsfest vorgesehenen Lagerhülsen aufgenommen sind, wobei die Lagerung jeweils mit dem für die horizontale Kreisbewegung notwendigen Spiel ausgestattet ist.

Um eine übermäßige Geräuschentwicklung bei der Taumelbewegung des Antriebselements bzw. der jeweiligen Lagerzapfen in den Lagerhülsen zu reduzieren, sind zwischen diesen beiden Elementen, entweder an der Lagerhülse oder an dem Lagerzapfen, geräuschmindernde Dämpfungselemente vorgesehen.

Die von dem Antriebselement durchgeführte Taumelbewegung wird dann auf das als Hohlrad ausgestaltete Abtriebselement übertragen, welches auf dem ortsfesten Lagerstab drehbar gelagert ist und demzufolge ausschließlich eine Rotationsbewegung vollführen kann.

Auf seiner dem Antriebselement gegenüberliegenden Seite weist das Abtriebselement ein Abtriebsteil auf, beispielsweise ein Ritzel oder ein Reibrad, welches dann mit einem entsprechenden Übertragungselement, beispielsweise einer Kette bzw. einem Riemen, des von dem Untersetzungsgetriebe anzutreibenden Mechanismus zusammenwirkt, wobei in einer vorteilhaften Ausgestaltung das Abtriebsteil und das Abtriebselement einstückig, insbesondere als Kunststoffspritzgussteil ausgebildet sind. Das abtriebsseitige Hohlrad kann hierbei das Antriebselement schalenartig übergreifen.

In einer weiteren Ausgestaltung des Untersetzungsgetriebes gemäß der Erfindung sind die jeweils ortsfesten Bestandteile, die Lagerhülsen und der Lagerstab, auf einer gemeinsamen Trägerplatte eines Gehäuses angeordnet und insbesondere einstückig mit dieser, insbesondere als Kunststoffspritzgussteil, verbunden.

Der vorhergehend geschilderte Aufbau des Untersetzungsgetriebes lässt sich einerseits über eine kraftschlüssige oder andererseits über eine formschlüssige Verbindung realisieren.

In einer Ausführungsform ist demzufolge das Antriebselement als ein Reibrad und das Abtriebselement als ein Radreifen ausgebildet, wobei sich der Umfangsabschnitt der Außenmantelfläche des Reibrads auf der Innenmantelfläche des Radreifens in fortlaufendem Wechsel abwälzt. In Abhängigkeit der Umfangsdifferenz kann eine entsprechende Untersetzung von der Umdrehung des motorgetriebenen Exzenters auf das auf der gehäusefesten Achse des Lagerstabs drehbar gelagerte abtriebsseitige Hohlrad übertragen werden.

In einer anderen Ausführungsform ist das Antriebselement als ein Zahnrad und das Abtriebselement als ein Hohlrad mit einer Innenverzahnung ausgebildet, wobei ein Umfangsabschnitt des Zahnrads mit der Verzahnung des Hohlrads kämmt. In entsprechender Weise wird bei dieser Ausführungsform über einen vorgegebenen Unterschied in der Zähnezahl zwischen der Innenverzahnung des Hohlrads und der Außenverzahnung des Zahnrads die gewünschte Untersetzung bewerkstelligt.

Der erfindungsgemäße Aufbau des Untersetzungsgetriebes zeichnet sich dadurch aus, dass ein extrem flacher Aufbau realisiert werden kann. Darüber hinaus ist die Anzahl der Bauteile im Vergleich zu den Lösungen aus dem Stand der Technik verringert, was die Kosten minimiert und über die Technik des Kunststoffspritzgießens eine billige Herstellung gestattet. Die Anordnung sämtlicher Bauteile auf einer gehäusefesten bzw. feststehenden Welle erlaubt darüber hinaus eine sehr einfache Montage aller Komponenten.

Mit einem derartigen Untersetzungsgetriebe lassen sich Übersetzungsverhältnisse im Bereich von 15:1 bis 100:1 je nach Wahl der Umfangsdifferenzen bzw. Zahnzahlunterschiede realisieren. Die dem Untersetzungsgetriebe zugrunde liegende Kinematik einer lediglich horizontal durchgeführten Taumelbewegung des Antriebselements gestattet darüber hinaus, dass für die Verzahnungen relativ "grobe" Zähne verwendet werden können, so dass die Kosten der Herstellung weiter reduziert werden können.

Hinsichtlich eines anderen Aspekts der Erfindung ist die Verwendung des geschilderten Untersetzungsgetriebes in Kombination mit einer Antriebseinheit vorgesehen, welche die durch die Erfindung bei dem Untersetzungsgetriebe realisierten Vorteile ebenfalls verkörpert.

Die erfindungsgemäße Antriebseinheit in Verbindung mit dem erfindungsgemäßen Untersetzungsgetriebe weist zusätzlich einen Elektromotor auf, welcher aus einem Rotor und einem Stator besteht.

Gemäß der Erfindung ist es vorgesehen, dass nun auch der Rotor auf dem orts- und drehfesten Lagerstab drehbar angeordnet ist. Diese Art und Weise der Lagerung ermöglicht auch für eine derartige Antriebseinheit eine einfache Montage unter Realisierung eines extrem flachen Aufbaus.

In einer Ausführung der Antriebseinheit gemäß der Erfindung ist es vorgesehen, dass der Rotor als Außenläufer ausgebildet ist und den Stator schalenartig übergreift. Dadurch wird ermöglicht, dass der Stator auf der Trägerplatte drehfest, und zwar um den Lagerstab herum, angeordnet werden kann, was die Kompaktheit des Aufbaus weiter erhöht.

Der mit dem Rotor zusammen wirkende Exzenter für das Untersetzungsgetriebe kann entweder als separates Bauteil auf dem ortsfesten Lagerstab drehbar gelagert oder auf der Oberfläche des schalenartigen Rotors mit diesem drehfest verbunden und vorzugsweise mit diesem einstückig, insbesondere als Kunststoffspritzgussteil, ausgebildet sein.

Die Trägerplatte, welche den Lagerstab und die Lagerhülsen stationär aufweist, kann des Weiteren die elektronische Steuereinheit und gegebenenfalls eine Sensorik für den Elektromotor aufnehmen.

Es wird deutlich, dass durch die Anordnung sämtlicher Bauteile sowohl des Untersetzungsgetriebes als auch des Elektromotors auf einer gemeinsamen Trägerplatte eine Antriebseinheit geschaffen wird, welche als Modul insgesamt angeboten und an Stellen mit einem geringen Bauraum eingebaut werden kann.

Bei der Antriebseinheit eignet sich insbesondere die Verwendung eines bürstenlosen Motors, welcher geräuschärmer arbeitet und eine Steuerung über die Drehzahl bzw. über eine Stromregelung gestattet. Dies ist insbesondere von Vorteil bei der Verwendung der erfindungsgemäßen Antriebseinheit als beispielsweise Fensterhebermotor, da bei drohender Gefahr eines Einklemmens von Fingern eine schnelle Umsteuerung sichergestellt sein muss, welche sich technisch bedingt bei einem bürstenlosen Motor einfacher und rascher umsetzen lässt.

Um eine derartige entsprechende Steuerung bzw. Regelung in der Antriebseinheit zu ermöglichen, weist der Rotor des Elektromotors in einer Ausführungsform der erfindungsgemäßen Antriebseinheit einen im Inneren des schalenartigen Rotors angeordneten Ring auf, welcher sich vertikal über die Außenmantelfläche des Rotors hinaus in Richtung zu der Trägerplatte erstreckt, wodurch ein von der Schale des Außenläufer-Rotors freiliegender Ring ausgebildet wird.

Gemäß der Erfindung kann hierfür die Sensorik aus Hall-Elementen aufgebaut sein, welche dann auf der Trägerplatte so angeordnet werden, dass sie dem freiliegenden Ring gegenüberliegen und an entsprechenden Umfangsabschnitten des Rings eine Drehzahlmessung über das Auftreten der bekannten Hall-Effekte realisieren.

Die erfindungsgemäße Antriebseinheit eignet sich insbesondere zur Verwendung im Kraftfahrzeugbereich, wo die Bauräume im Allgemeinen begrenzt sind. So kann die Antriebseinheit als Verstellmotor allgemein für die Verstellung der Fahrzeugsitze, als Fensterhebermotor oder als Scheibenwischermotor verwendet werden. Andere Einsatzgebiete außerhalb des Kraftfahrzeugbereichs sind selbstverständlich ebenfalls möglich, bei denen stets ein nur geringer Bauraum zur Verfügung steht und eine entsprechende Untersetzung bereitgestellt werden muss.

Die vorliegende Erfindung wird nun anhand der Beschreibung der in den beiliegenden Zeichnungen dargestellten Ausführungsbeispiele näher erläutert werden. Es zeigen:
- Fig. 1: eine schematische Querschnittsdarstellung des erfindungsgemäßen Untersetzungsgetriebes;
- Fig. 2a, 2b, 2c u. 2d: von unten gesehen schematische Querschnittsdarstellungen von vier verschiedenen Stellungen des Antriebselements innerhalb des Abtriebselements des erfindungsgemäßen Untersetzungsgetriebes;
- Fig. 3: eine schematische Querschnittsdarstellung durch die erfindungsgemäße Antriebseinheit bestehend aus dem erfindungsgemäßen Untersetzungsgetriebe und einem Elektromotor;
- Fig. 4: eine Explosionsdarstellung der Antriebseinheit;
- Fig. 5: eine perspektivische Darstellung der Antriebseinheit mit abgenommenem Abtriebselement;
- Fig. 6: eine perspektivische Darstellung der Antriebseinheit mit montiertem Abtriebselement; und
- Fig. 7: eine Seitenansicht des Elektromotors mit der Steuereinheit.

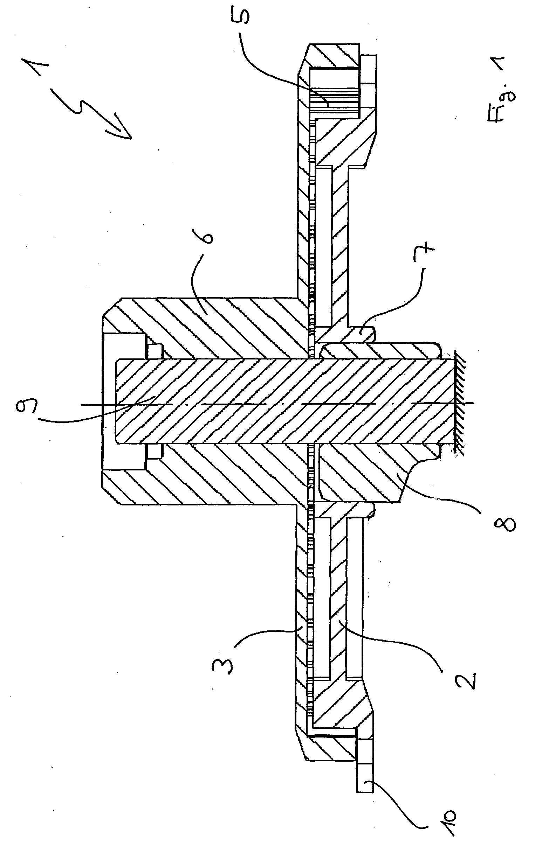

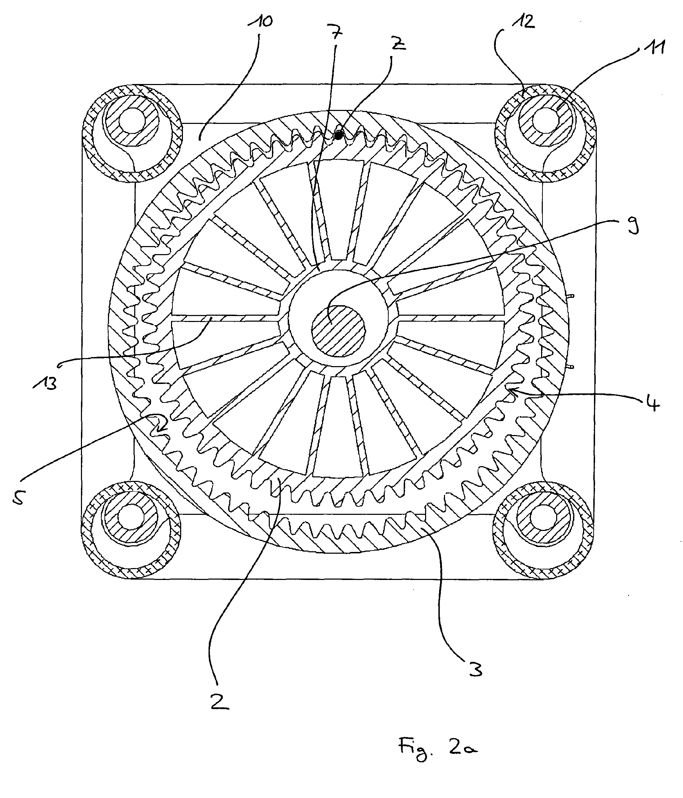

Figur 1 zeigt schematisch einen Querschnitt durch ein Untersetzungsgetriebe 1 gemäß der vorliegenden Erfindung.

Das Untersetzungsgetriebe 1 besteht im Wesentlichen aus einem Antriebselement 2 und einem Abtriebselement 3.

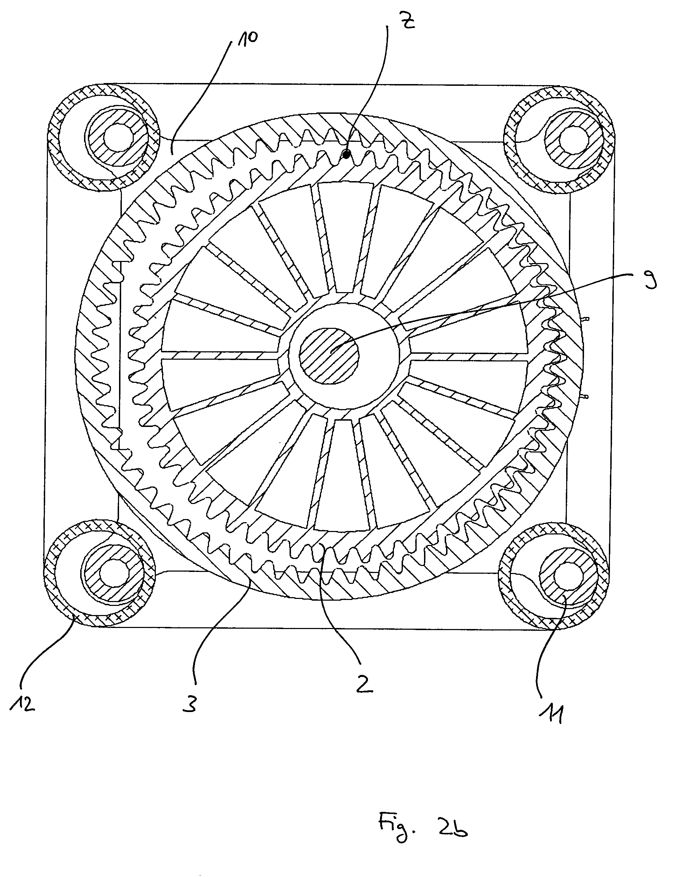

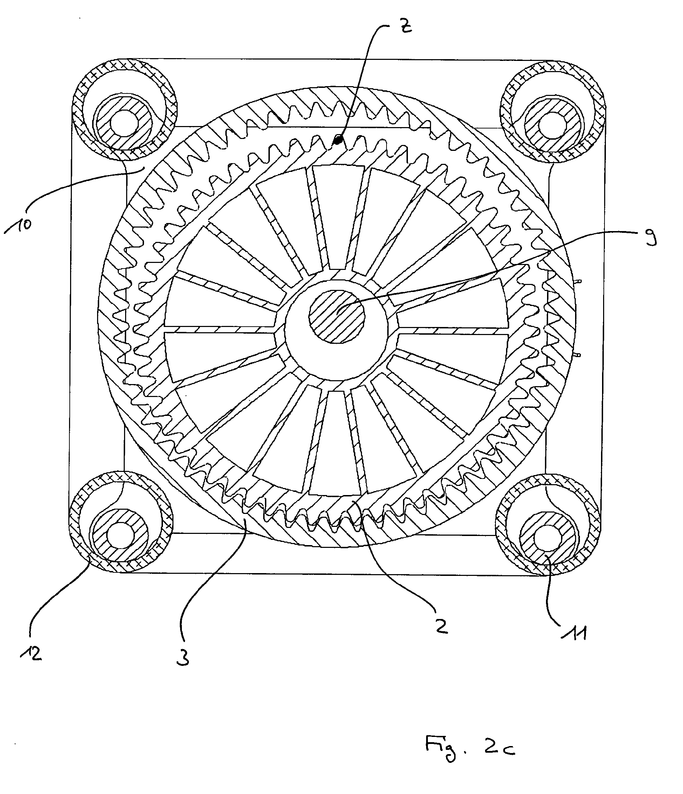

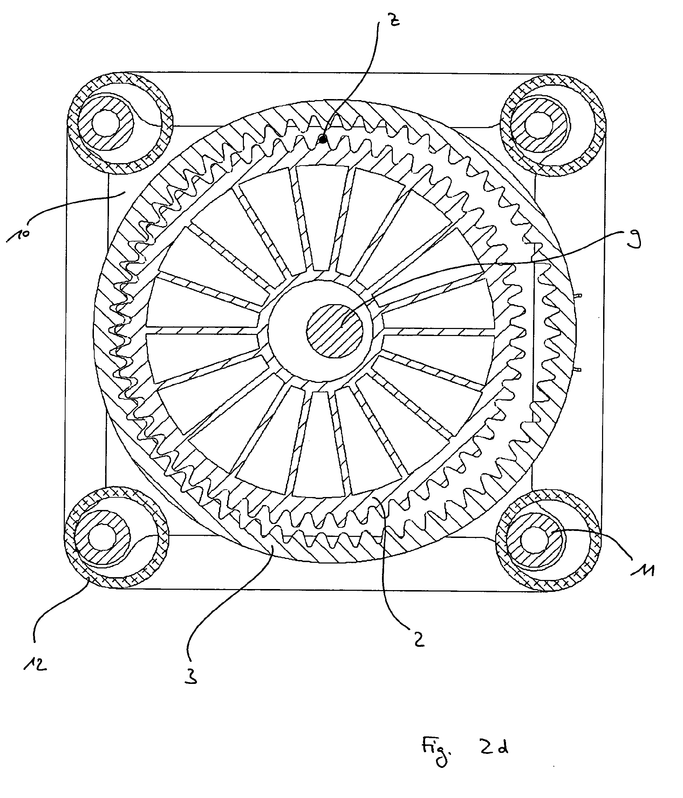

Das Antriebselement 2 ist als ein starres, nicht verformbares Zahnrad mit einer Außenverzahnung 4 ausgebildet. Die Außenverzahnung 4 des Zahnrads 2 kämmt über einen Umfangsabschnitt mit einer Innenverzahnung 5 des Abtriebselements 3, wie dies insbesondere aus den Figuren 2a bis 2d zu ersehen ist.

Das Abtriebselement 3 ist dementsprechend als ein Hohlrad ausgebildet, welches das Zahnrad 4 schalenartig übergreift. An der dem Zahnrad 2 gegenüberliegenden Seite weist das Hohlrad 3 ein Abtriebselement 6 einstückig angeformt auf, welches mit einem hier nicht näher dargestellten Übertragungselement des von dem Untersetzungsgetriebe 1 anzutreibenden Mechanismus zusammenwirken soll. In der vorliegenden Darstellung ist das Abtriebsteil 6 als ein Reibrad ausgestaltet, welches beispielsweise mit einem Riemen kooperieren kann.

Das Zahnrad 2 weist eine Nabe 7 auf, welche einen motorgetriebenen Exzenter 8 aufnimmt. Der Exzenter 8 ist in der Nabe 7 gleitfähig aufgenommen, d.h. er kann sich relativ gegenüber der inneren Umfangsfläche der Nabe 7 verdrehen.

Wie in der Figur 1 zu sehen ist, sind sämtliche Elemente des Untersetzungsgetriebes 1, das Zahnrad 2, das Hohlrad 3 und der motorgetriebene Exzenter 8 um einen gemeinsamen Lagerstab 9 drehbeweglich angeordnet.

Der Lagerstab 9 selbst ist jedoch ortsfest, d.h. nicht drehend, beispielsweise in einem hier nicht näher dargestellten Gehäuse für das Untersetzungsgetriebe 1, montiert.

Die Figuren 2a bis 2d zeigen im Folgenden nun die von dem Zahnrad 2 durchgeführte Bewegung mit Hilfe von Schnittdarstellungen durch das erfindungsgemäße Untersetzungsgetriebe 1 von unten gesehen, wobei aus Gründen einer besseren Darstellung die Schraffierung des Exzenters 8 weggelassen wurde.

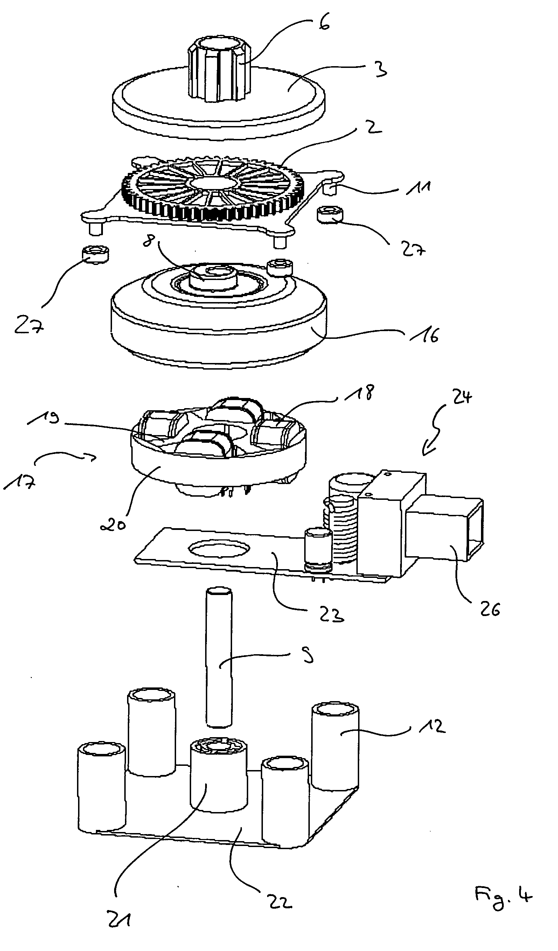

Das Zahnrad 2 ist einstückig auf einer Lagerplatte 10 angeordnet. Die Lagerplatte 10 weist an ihren jeweiligen Ecken Lagerzapfen 11 auf, welche in gehäusefesten Lagerhülsen 12 gelagert sind, wie dies exemplarisch aus den Figuren 4 bis 6 zu entnehmen ist.

Aufgrund der so ausgestalteten Lagerung des Zahnrads 2 in vier konzentrisch um den Lagerstab 9 angeordneten Lagerhülsen 12 wird eine Drehbewegung des Zahnrads 2 vollständig verhindert. Die Lagerzapfen 11 der Lagerplatte 10 selbst sind mit einem entsprechenden Spiel in den Lagerhülsen 12 gelagert. Dieses Spiel entspricht exakt der von dem Zahnrad 2 beim Übertragen auf das Abtriebshohlrad 3 vollführten Taumelbewegung in der horizontalen Ebene.

Wie zu erkennen ist, weist das Zahnrad 2 zwischen seiner Nabe 7 und seiner Außenverzahnung 4 Speichen 13 auf, um eine gewisse Gewichtseinsparung bei ausreichender Steifigkeit zu ermöglichen.

Anhand des Punktes Z an einem Zahn der Außenverzahnung 4 des Zahnrades 2 soll exemplarisch die in der Folge der Figuren 2a bis 2d dargestellte Taumelbewegung des Zahnrads 2 verdeutlicht werden.

In Figur 2a ist eine erste Stellung des Zahnrads 2 gezeigt. Der Exzenter 8 dreht sich in der Nabe 7 und weist mit seiner Exzentrizität nach oben in der Figur 2a, so dass der Zahn Z innerhalb seines entsprechenden Umfangsabschnitts der Außenverzahnung 4 des Zahnrads 2 in Eingriff mit der Innenverzahnung 5 des Hohlrads 3 steht. In entsprechender Weise stoßen die Lagerzapfen 11 in den oberen Abschnitten der Lagerhülsen 12 an.

Wie in Figur 2b gezeigt, hat sich der Exzenter 8 nun im Uhrzeigersinn um in der Darstellung weitere 90 Grad weiter gedreht, wobei dieser innerhalb der Nabe 7 des Zahnrads 2 gleitet. Dies bewirkt, dass der Zahn Z an seiner entsprechenden Stelle nicht mehr in Eingriff mit dem drehbar gelagerten Abtriebshohlrad 3 steht. Vielmehr wandert der mit der Innenverzahnung 5 in Eingriff stehende Umfangsabschnitt des Zahnrads 2 ebenfalls um 90 Grad im Uhrzeigersinn. Diese Bewegung wird ebenfalls von dem Lagerzapfen 11 in den Lagerhülsen 12 ausgeführt.

Figur 2c zeigt eine weitere Drehung des Exzenters 8 um 90 Grad im Uhrzeigersinn. In entsprechender Weise wandert der Umfangsabschnitt, welcher in Eingriff mit der Innenverzahnung 5 des Hohlrads 3 steht, um 90 Grad im Uhrzeigersinn mit. Diese Bewegung wird weiter vollführt, wie dies in Figur 2d zu sehen ist, bis schließlich der Zahn Z wieder in Eingriff mit der Innenverzahnung 5 des Hohlrads 3 gelangt.

Aus dieser Bewegungsfolge ist zu erkennen, dass sich der Punkt bzw. der Zahn Z nicht um die Achse des Lagerstabs 9 dreht, sondern vielmehr eine kreisähnliche Bewegung außerhalb des durch die Achse des Lagerstabs 9 definierten Zentrums vollführt, was die Taumelbewegung des Zahnrads 2 bzw. der Lagerplatte 10 beschreibt. In gleicher Weise beschreiben die Lagerzapfen 11 diese kreisähnliche Bewegung in den Lagerhülsen 12.

Es wird deutlich, dass aufgrund der Tatsache, dass das Zahnrad 2 sich nicht um die Achse des Lagerstabs 9 dreht und lediglich horizontal taumelt und sich dadurch ein Umfangsabschnitt seiner Außenverzahnung 4 abschnittsweise bzw. im fortlaufenden Wechsel mit der Innenverzahnung 5 abwälzt, die Taumelbewegung in eine Drehung des drehbar gelagerten Hohlrads 3 übertragen wird. Durch die Unterschiede in der Zähnezahl, wobei die Zähnezahl des Zahnrads 2 entsprechend geringer als die Zähnezahl der Innenverzahnung 5 des Hohlrads 3 ist, lassen sich entsprechende Untersetzungsverhältnisse realisieren.

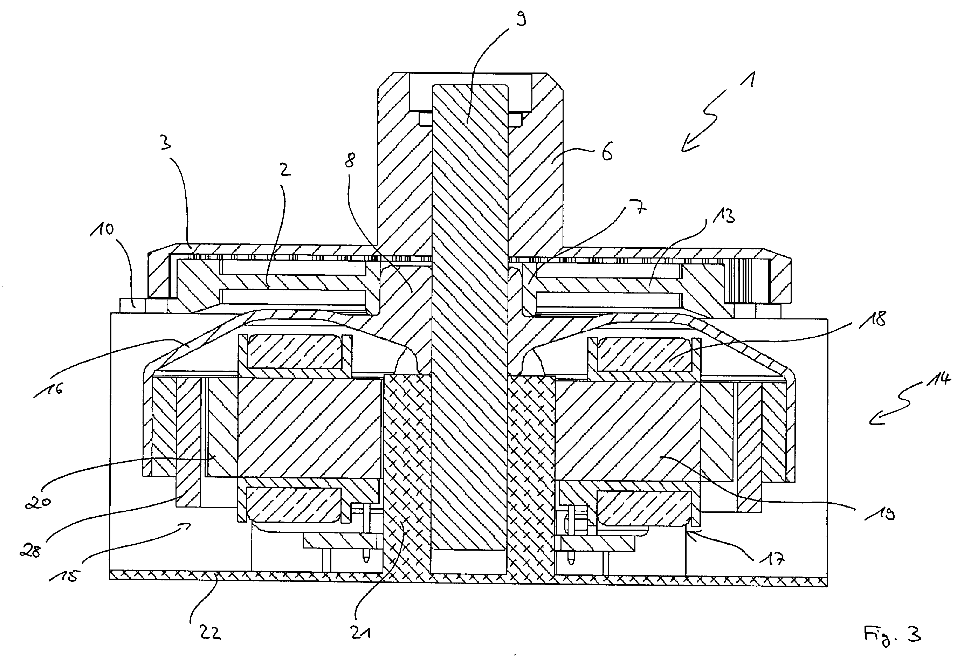

Figur 3 zeigt exemplarisch einen Querschnitt durch eine Antriebseinheit 14 gemäß der Erfindung, welche das Untersetzungsgetriebe 1 in Kombination mit einem Elektromotor 15 aufweist.

Der Elektromotor 15 besteht aus einem Rotor 16 und einem Stator 17.

Der Rotor 16 ist ein Außenläufer und übergreift schalenartig den Stator 17, welcher einander gegenüberliegend vier Spulen 18 aufweist. Die Spulen 18 werden, wie in Figur 4 gezeigt ist, auf einen sternförmigen Statorkern 19 aufgesetzt und sind von einem umfänglich geschlossenen Statorring 20 umgeben. Dies gestattet eine einfache Montage der Spulen 18, was eine separate Wicklung der Statorkerne 19 überflüssig macht und innerhalb der Antriebseinheit 14 eine einfache Montage des gesamten Stators 17 auf dem Lagerstab 9 ermöglicht.

Wie in Figur 3 zu erkennen ist, ist der Exzenter 8 einstückig mit dem schalenartigen Rotor 16 ausgebildet. Da der Exzenter 8 unmittelbar in die Nabe 7 des Zahnrads 2 eingreift, wird dadurch ein sehr kompakter Aufbau geschaffen.

Der Lagerstab 9 ist in einer Lagerbuchse 21 drehfest aufgenommen. Um die Lagerbuchse 21 herum ist der Stator 17 des Elektromotors 15 drehfest angeordnet.

Die Lagerbuchse 21 für den Lagerstab 9 ist Bestandteil einer Trägerplatte 22 und mit dieser einstückig ausgebildet.

Die Trägerplatte 22 weist des Weiteren, wie aus der Explosionsdarstellung in Figur 4 zu ersehen ist, die vier Lagerhülsen 12 des Untersetzungsgetriebes 1 auf, in welche die Lagerzapfen 11 mit Spiel aufgenommen sind.

Auf der Trägerplatte 22 kann darüber hinaus über eine Befestigung an der Lagerbuchse 21 eine Platine 23 angeordnet werden, auf welcher die elektronische Steuereinheit 24 und eine Sensorik 25 sowie eine Stromversorgung 26 für den Elektromotor 15 angeordnet ist. Es wird deutlich, dass dadurch die Kompaktheit und die Möglichkeit eines flachen Aufbaus der gesamten Antriebseinheit 14 weiter erhöht wird.

Wie in der Figur 4 zu erkennen ist, sind die Lagerzapfen 11 der Lagerplatte 10 des Zahnrads 2 in den Lagerhülsen 12 mit Dämpfungselementen 27 geführt, um eine entsprechende Geräuschminderung zu bewerkstelligen.

In der in Figur 4 gezeigten Ausführungsform ist das Abtriebsteil 6 des Abtriebselements 3 als ein Ritzel für beispielsweise einen Keilriemen ausgebildet.

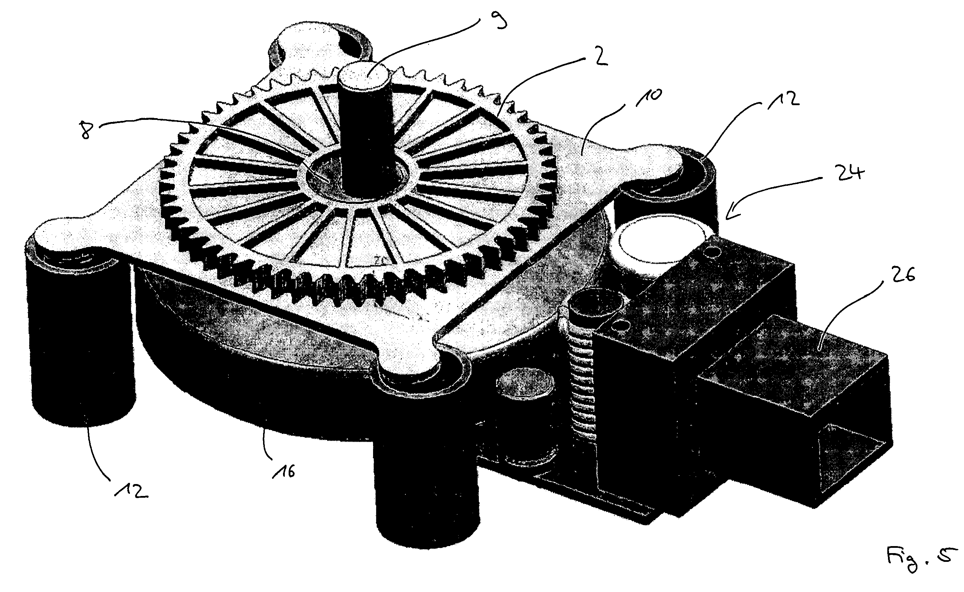

Figur 5 zeigt exemplarisch in perspektivischer Ansicht die Antriebseinheit 14 mit abgenommenem Abtriebselement 3. Wie zu erkennen ist, ist die Lagerplatte 10 in den vier Lagerhülsen 12 über die Lagerzapfen 11 horizontal beweglich gelagert. Der Exzenter 8, der sich um den Lagerstab 9 dreht, läuft in der Nabe 7 des Zahnrads 2, wobei die Außenmantelfläche des Exzenters 8 relativ gegenüber der Innenfläche der Nabe 7 gleitet bzw. sich verdreht, und bewirkt so die horizontalen Verschiebungen der Lagerplatte 10 bzw. des Zahnrads 2 während der Taumelbewegung.

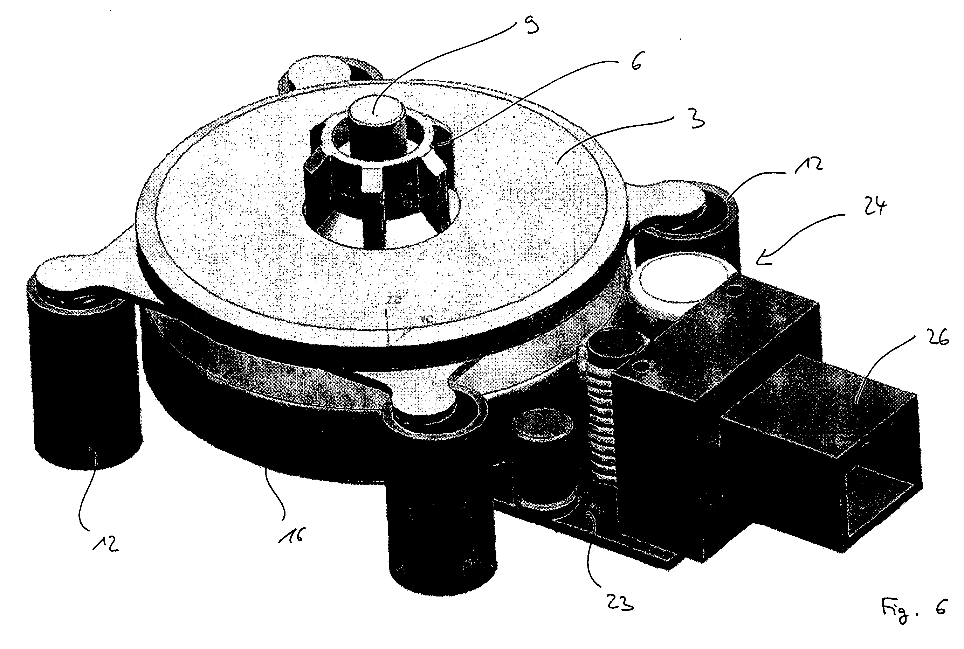

Figur 6 zeigt in perspektivischer Ansicht die komplette Antriebseinheit 14 mit auf dem Lagerstab 9 drehbar gelagertem Abtriebselement 3. Wie zu erkennen ist, zeichnet sich die Antriebseinheit 14 durch einen besonders flache Bauart aus, wobei sich sämtliche Bestandteile des Untersetzungsgetriebes 1, des Elektromotors 15 und die entsprechenden Zusatzkomponenten 24, 25, 26 in einem Modul verwirklichen lassen.

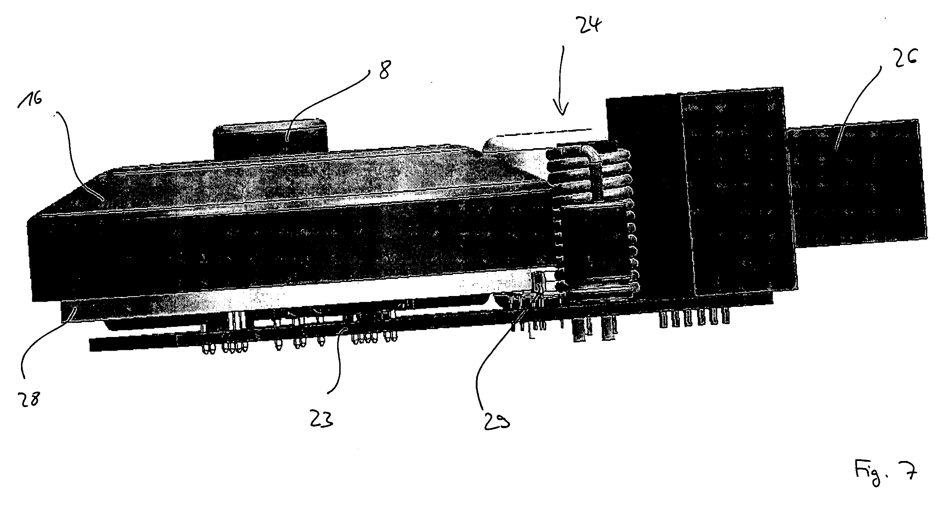

Wie in der Schnittdarstellung der Figur 3 und in der Seitenansicht der Figur 7 zu erkennen ist, weist der Rotor 16 zusätzlich einen umlaufenden Ring 28 auf, welcher sich über die Außenmantelfläche des Rotors 16 hinaus konzentrisch zu dem Lagerstab 9 vertikal nach unten erstreckt. Dieser umlaufende Ring 28 kooperiert mit Hall-Elementen 29, die auf der Platine 23 an solchen Stellen angeordnet sind, dass sie den umlaufenden Ring 28 abtasten können.

### Bezugszeichenliste:

- 1: Untersetzungsgetriebe
- 2: Antriebselement, Zahnrad
- 3: Abtriebselement, Hohlrad
- 4: Außenverzahnung des Zahnrads
- 5: Innenverzahnung des Hohlrads
- 6: Abtriebsteil, Reibrad, Ritzel
- 7: Nabe des Zahnrads
- 8: Exzenter
- 9: Lagerstab
- 10: Lagerplatte
- 11: Lagerzapfen
- 12: Lagerhülsen
- 13: Speichen des Zahnrads
- 14: Antriebseinheit
- 15: Elektromotor
- 16: Rotor
- 17: Stator
- 18: Spulen
- 19: Statorkern
- 20: Statorring
- 21: Lagerbuchse für Lagerstab
- 22: Trägerplatte
- 23: Platine
- 24: Elektronische Steuereinheit
- 25: Sensorik
- 26: Stromversorgung
- 27: Dämpfungselemente
- 28: Ring
- 29: Hall-Elemente
- Z: Punkt auf einem Zahn des Zahnrads

## Patentansprüche

1. Untersetzungsgetriebe (1) bestehend aus einem Antriebselement (2) und aus einem Abtriebselement (3), wobei das Abtriebselement (3) in der Form eines Hohlrades ausgebildet ist und wobei das Antriebselement (2) relativ zu der Drehachse des Abtriebselements (3) exzentrisch gelagert ist derart, dass das Antriebselement (2) mit zumindest einem Umfangsabschnitt seiner Mantelfläche (4) mit der Innenfläche (5) des Hohlrads in fortlaufendem Wechsel in Kontakt steht, **dadurch gekennzeichnet, dass** das Antriebselement (2) und das Abtriebselement (3) auf einem orts- und drehfesten Lagerstab (9) gelagert sind.

2. Untersetzungsgetriebe nach Anspruch 1, bei welchem das Antriebselement (2) in zumindest einem ortsfesten Lager (12) gelagert ist, so dass eine Drehbewegung des Antriebselements (2) um die Achse des Lagerstabs (9) verhindert wird, wobei die Lagerung des Antriebselements (2) in dem zumindest einem ortsfesten Lager (12) zumindest ein solches Spiel aufweist, dass das Antriebselement (2) beim Abwälzen seines zumindest einen Umfangsabschnitts seiner Mantelfläche (4) auf der Innenfläche (5) des Hohlrads eine Taumelbewegung um die Achse des Lagerstabs (9) ausübt.

3. Untersetzungsgetriebe nach Anspruch 2, bei welchem das Antriebselement (2) eine Nabe (7) aufweist, in welcher ein um die Achse des Lagerstabs (9) drehbar gelagerter, motorgetriebener Exzenter (8) gleitend aufgenommen ist.

4. Untersetzungsgetriebe nach Anspruch 3, bei welchem das Antriebselement (2) drehfest auf einer dem Hohlrad gegenüberliegenden Lagerplatte (10) angeordnet ist, welche horizontal beweglich gelagert ist und eine Öffnung für einen berührungslosen Durchgriff des Lagerstabs (9) aufweist.

5. Untersetzungsgetriebe nach Anspruch 4, bei welchem die Lagerplatte (10) auf der dem Antriebselement (2) gegenüberliegenden Seite und parallel zu dem Lagerstab (9) vier vertikale Lagerzapfen (11) aufweist, welche in vier konzentrisch um den Lagerstab (9) angeordnete ortsfeste Lagerhülsen (12) mit Spiel geführt sind.

6. Untersetzungsgetriebe nach Anspruch 5, bei welchem zwischen den Lagerzapfen (11) und den Lagerhülsen (12) Dämpfungselemente (27) vorgesehen sind.

7. Untersetzungsgetriebe nach einem der Ansprüche 4 bis 6, bei welchem das Antriebselement (2) mit der Lagerplatte (10) einstückig, insbesondere als Kunststoffspritzgussteil, ausgebildet ist.

8. Untersetzungsgetriebe nach einem der vorhergehenden Ansprüche, bei welchem das Hohlrad auf dem Lagerstab (9) drehbar gelagert ist und auf seiner dem Antriebselement (2) gegenüberliegenden Seite eine Abtriebsteil (6) aufweist, welches mit einem Übertragungselement des von dem Untersetzungsgetriebe (1) anzutreibenden Mechanismus zusammen wirkt.

9. Untersetzungsgetriebe nach Anspruch 8, bei welchem das Abtriebsteil (6) und das Abtriebselement (3) einstückig, insbesondere als Kunststoffspritzgussteil ausgebildet ist.

10. Untersetzungsgetriebe nach einem der Ansprüche 5 bis 9, bei welchem die Lagerhülsen (12) und der Lagerstab (9) auf einer gemeinsamen Trägerplatte (22) angeordnet sind und insbesondere mit der Trägerplatte (22) einstückig, insbesondere als Kunststoffspritzgussteil, ausgebildet sind.

11. Untersetzungsgetriebe nach einem der Ansprüche 1 bis 10, bei welchem das Antriebselement (2) als ein Reibrad und das Abtriebselement (3) als ein Radreifen unter Ausbildung eines kraftschlüssigen Kontakts ausgestaltet sind.

12. Untersetzungsgetriebe nach einem der Ansprüche 1 bis 10, bei welchem das Antriebselement (2) als ein Zahnrad und das Abtriebselement (3) als ein Hohlrad mit einer Innenverzahnung unter Ausbildung eines formschlüssigen Kontakts ausgestaltet sind.

13. Antriebseinheit bestehend aus einem Elektromotor (15) mit einem Rotor (16) und mit einem Stator (17) und aus einem Untersetzungsgetriebe (1) nach den Ansprüchen 1 bis 13, **dadurch gekennzeichnet, dass** der Rotor (16), der Exzenter (8) und das Abtriebselement (3) auf dem orts- und drehfesten Lagerstab (9) drehbar angeordnet sind.

14. Antriebseinheit nach Anspruch 13, bei welcher der Exzenter (8) mit dem Rotor (16) einstückig, insbesondere als Kunststoffspritzgussteil, ausgebildet ist.

15. Antriebseinheit nach Anspruch 13 oder 14, bei welcher der Stator (17) auf der Trägerplatte (22) drehfest um den Lagerstab (9) angeordnet ist und der Rotor (16) als ein außenliegend über dem Stator (17) ausgebildetes Hohlrad ausgebildet ist.

16. Antriebseinheit nach einem der Ansprüche 13 bis 15, bei welcher die Trägerplatte (22) eine elektronische Steuereinheit (24) und eine Sensorik (25) für den Elektromotor (15) aufweist.

17. Antriebseinheit nach Anspruch 17, bei welcher der Rotor (16) einen innen liegenden Ring (28) aufweist, welcher sich vertikal über die Außenmantelfläche des Rotors (16) hinaus in Richtung zu der Trägerplatte (22) erstreckt.

18. Antriebseinheit nach Anspruch 17, bei welcher die Sensorik (24) aus Hall-Elementen (29) aufgebaut ist, welche auf der Trägerplatte (22) so angeordnet sind, dass sie dem freiliegenden Umfangsabschnitt des Rings (28) gegenüberliegen.

19. Verwendung einer Antriebseinheit (14) nach einem der Ansprüche 13 bis 18 als ein Verstellmotor in einem Kraftfahrzeug.
